(19) Europäisches Patentamt / European Patent Office / Office européen des brevets

(11) **EP 3 347 739 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **16760708.4**

(22) Anmeldetag: **05.09.2016**

(51) Int Cl.:
*G01S 17/93* (2006.01)   *B60R 21/0134* (2006.01)

(86) Internationale Anmeldenummer:
**PCT/EP2016/070813**

(87) Internationale Veröffentlichungsnummer:
**WO 2017/042118 (16.03.2017 Gazette 2017/11)**

(54) **VERFAHREN ZUM BESTIMMEN EINER SCHWERE EINER MÖGLICHEN KOLLISION ZWISCHEN EINEM KRAFTFAHRZEUG UND EINEM WEITEREN FAHRZEUG, STEUEREINRICHTUNG, FAHRERASSISTENZSYSTEM SOWIE KRAFTFAHRZEUG**

METHOD FOR DETERMINING THE SEVERITY OF A POSSIBLE COLLISION BETWEEN A MOTOR VEHICLE AND A FURTHER VEHICLE, CONTROL DEVICE, DRIVER ASSISTANCE SYSTEM AND MOTOR VEHICLE

PROCÉDÉ DE DÉTERMINATION D'UNE GRAVITÉ D'UNE ÉVENTUELLE COLLISION ENTRE UN VÉHICULE AUTOMOBILE ET UN AUTRE VÉHICULE AUTOMOBILE, DISPOSITIF DE COMMANDE, SYSTÈME D'ASSISTANCE À LA CONDUITE AINSI QUE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2015 DE 102015115135**

(43) Veröffentlichungstag der Anmeldung:
**18.07.2018 Patentblatt 2018/29**

(73) Patentinhaber: **Valeo Schalter und Sensoren GmbH**
**74321 Bietigheim-Bissingen (DE)**

(72) Erfinder:
• **TESTAR, Miquel**
**74321 Bietigheim-Bissingen (DE)**
• **WAQAS, Malik**
**74321 Bietigheim-Bissingen (DE)**

(74) Vertreter: **Withopf, Kristina et al**
**Valeo Schalter und Sensoren GmbH**
**CDA-IP**
**Laiernstraße 12**
**74321 Bietigheim-Bissingen (DE)**

(56) Entgegenhaltungen:
DE-A1- 10 354 035     DE-A1-102006 002 746
DE-A1-102007 047 404     DE-A1-102014 000 842
US-A- 6 085 151

• **Steven G Shelby: "DELTA-V AS A MEASURE OF TRAFFIC CONFLICT SEVERITY", , 16. September 2011 (2011-09-16), XP055322166, Gefunden im Internet: URL:http://onlinepubs.trb.org/onlinepubs/conferences/2011/RSS/1/Shelby,S.pdf [gefunden am 2016-11-23] in der Anmeldung erwähnt**

**Beschreibung**

Die vorliegende Erfindung betrifft ein Verfahren zum Bestimmen einer möglichen Kollision zwischen einem Kraftfahrzeug und einem weiteren Fahrzeug, bei welchem mittels einer Steuereinrichtung von zumindest einem Sensor des Kraftfahrzeugs Sensordaten empfangen werden, welche das weitere Fahrzeug beschreiben, anhand der Sensordaten eine Geschwindigkeitsänderung, welche einen Unterschied zwischen einer Geschwindigkeit des Kraftfahrzeugs vor der Kollision und einer Kollisionsgeschwindigkeit des Kraftfahrzeugs nach der Kollision beschreibt, bestimmt wird und die Schwere der möglichen Kollision anhand der bestimmten Geschwindigkeitsänderung bestimmt wird. Darüber hinaus betrifft die vorliegende Erfindung eine Steuereinrichtung für ein Kraftfahrzeug. Zudem betrifft die vorliegende Erfindung ein Fahrerassistenzsystem für ein Kraftfahrzeug. Schließlich betrifft die vorliegende Erfindung ein Kraftfahrzeug mit einem derartigen Fahrerassistenzsystem.

Das Interesse richtet sich vorliegend insbesondere auf das Bestimmen einer Schwere einer möglichen Kollision zwischen einem Kraftfahrzeug und einem Objekt, insbesondere einem weiteren Fahrzeug. Hierzu sind aus dem Stand der Technik Systeme bekannt, bei denen mit einem entsprechenden Sensor das weitere Kraftfahrzeug, mit dem die Kollision droht, erfasst wird. Ein solcher Sensor kann dazu ausgelegt sein, einen Abstand bzw. eine relative Lage zwischen dem Kraftfahrzeug und dem weiteren Fahrzeug zu bestimmen. Ferner kann der Sensor dazu ausgelegt sein, eine Relativgeschwindigkeit zwischen dem Kraftfahrzeug und dem weiteren Fahrzeug zu bestimmen. Ein solcher Sensor kann beispielsweise ein Radarsensor sein, der dazu ausgebildet ist, eine relative Lage zwischen dem Kraftfahrzeug und dem weiteren Fahrzeug und/oder eine Relativgeschwindigkeit zwischen dem Kraftfahrzeug und dem weiteren Fahrzeug zu bestimmen. Anhand dieser Daten kann dann eine Zeit bis zu der Kollision (TTC - Time To Collision) und/oder eine Kollisionswahrscheinlichkeit bestimmt werden. In Abhängigkeit von diesen Daten können dann Insassenschutzeinrichtungen des Kraftfahrzeugs angesteuert werden.

Hierzu beschreibt die US 6 085 151 A ein Kollisionswarnsystem für ein Fahrzeug, welches einen Radarsensor umfasst. Anhand der Sensordaten, die mit dem Radarsensor erfasst werden, kann ein Abstand zwischen einem Ziel und dem Kraftfahrzeug bestimmt werden. Darüber hinaus kann eine Größe des Ziels abgeschätzt werden.

Des Weiteren ist in der DE 199 33 782 A1 ein Verfahren zur Vermeidung von Auffahrunfällen durch die Beobachtung des rückwärtigen Verkehrsraums eines ersten Kraftfahrzeugs beschrieben. Bei dem Verfahren erfolgt eine Ermittlung der Eigengeschwindigkeit des ersten Kraftfahrzeugs, eine Bestimmung der Relativgeschwindigkeit zwischen dem ersten Kraftfahrzeug und einem sich hinter dem ersten Kraftfahrzeug befindenden zweiten Kraftfahrzeug, eine Bestimmung der Distanz zwischen dem ersten und dem zweiten Kraftfahrzeug und die Berechnung der Zeit, die verbleibt, bis die beiden Fahrzeuge miteinander kollidieren würden. Ferner wird hierbei ein vorgegebener Wert für die Verzögerung des zweiten Fahrzeugs berücksichtigt.

Des Weiteren ist es bekannt, eine Geschwindigkeitsänderung abzuschätzen, welche den Unterschied zwischen der aktuellen Geschwindigkeit vor der Kollision und einer Kollisionsgeschwindigkeit nach der Kollision beschreibt, und die Schwere des Zusammenstoßes anhand der Geschwindigkeitsänderung zu bestimmen. Dies ist beispielsweise in dem Artikel "Delta-V as a measure of traffic conflict severity" von S. G. Shelby, 3rd International Conference on Road Safety and Simulation, September 14-16, 2011, USA, beschrieben.

Die DE 10 2006 002 746 A1 offenbart ein Verfahren und eine Vorrichtung zur Ansteuerung von Personenschutzmitteln. Die Ansteuerung wird in Abhängigkeit von wenigstens einem Umfeldsignal und wenigstens einem Aufprallsignal vorgenommen. Dabei wird in Abhängigkeit von dem wenigstens einen Umfeldsignal eine Fahrzeuggeschwindigkeit nach einem Aufprall und/oder eine Beschleunigung nach einem Aufprall bestimmt, wobei die Fahrzeuggeschwindigkeit und/oder die Beschleunigung zur Ansteuerung der Personenschutzmittel herangezogen werden.

DE 103 54 035 A1 beschreibt eine Vorrichtung zur Objekterkennung für ein Kraftfahrzeug-Insassenschutzsystem mit mindestens einem optischen Erfassungssystem zum Erfassen mindestens eines Umgebungsbereichs eines Kraftfahrzeugs und einer Auswerteinheit, die zum Analysieren mindestens eines Objekts im mindestens einen erfassten Umgebungsbereich anhand von Signalen des mindestens einen optischen Erfassungssystems und zum Ermitteln einer dem mindestens einen Objekt zugeordneten Masse und zum Erzeugen mindestens eines von der ermittelten Masse abhängigen Steuersignals für das Kraftfahrzeug-Insassenschutzsystem ausgebildet ist.

Es ist Aufgabe der vorliegenden Erfindung, eine Lösung aufzuzeigen, wie eine Schwere einer möglichen Kollision zwischen einem Kraftfahrzeug und einem weiteren Fahrzeug zuverlässiger bestimmt werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche, der Beschreibung und der Figuren.

Ein erfindungsgemäßes Verfahren dient zum Bestimmen einer Schwere einer möglichen Kollision zwischen einem Kraftfahrzeug und einem weiteren Fahrzeug. Hierbei werden mittels einer Steuereinrichtung von zumindest einem Sensor des Kraftfahrzeugs Sensordaten empfangen, welche das weitere Fahrzeug beschreiben, anhand der Sensordaten wird eine Geschwindigkeitsänderung, welche einen Unterschied zwischen einer Geschwindigkeit des Kraftfahrzeugs vor der Kollision und einer Kollisionsgeschwindigkeit des Kraftfahrzeugs nach der Kollision beschreibt, bestimmt und die Schwere der möglichen Kollision wird anhand der bestimmten Geschwindigkeitsänderung bestimmt. Des Weiteren wird mittels der Steuereinrichtung anhand der Sensordaten eine Masse des weiteren Fahrzeugs geschätzt und die Schwere der möglichen Kollision zusätzlich anhand der geschätzten Masse bestimmt.

Mit Hilfe des Verfahrens soll die Schwere einer möglichen Kollision bzw. eines möglichen Zusammenstoßes zwischen einem Kraftfahrzeug und einem weiteren Objekt in der Umgebung des Kraftfahrzeugs, insbesondere einem weiteren Fahrzeug, bestimmt werden. Hierzu werden mit einem Sensor des Kraftfahrzeugs Sensordaten erfasst, welche insbesondere die Umgebung des Kraftfahrzeugs beschreiben. Dabei beschreiben die Sensordaten das zumindest eine weitere Fahrzeug in der Umgebung des Kraftfahrzeugs. Der Sensor kann beispielsweise dazu ausgelegt sein, ein Sendesignal auszusenden, welches dann von dem weiteren Fahrzeug reflektiert wird und wieder zu dem Sensor zurückgelangt. Dabei kann es weiterhin vorgesehen sein, dass mit dem Sensor fortlaufend Messzyklen durchgeführt werden, bei denen jeweils ein Sendesignal ausgesendet wird und das von dem weiteren Fahrzeug reflektierte Sendesignal wieder empfangen wird. Der Sensor kann insbesondere ein Radarsensor sein. Grundsätzlich kann der Sensor auch ein Lidar-Sensor, ein Laserscanner oder ein Ultraschallsensor sein. Der zumindest eine Sensor ist zur Datenübertragung mit einer Steuereinrichtung verbunden. Diese Steuereinrichtung kann eine entsprechende Recheneinrichtung, ein digitaler Signalprozessor, ein Mikroprozessor oder dergleichen sein. Insbesondere kann die Steuereinrichtung ein elektronisches Steuergerät des Kraftfahrzeugs sein. Anhand der Sensordaten, die von dem zumindest einen Sensor an die Steuereinrichtung übertragen werden, kann die Steuereinrichtung beispielsweise eine Relativgeschwindigkeit zwischen dem Kraftfahrzeug und dem weiteren Fahrzeug bestimmen. Hierzu kann die Steuereinrichtung den jeweiligen Abstand zwischen dem Kraftfahrzeug und dem weiteren Fahrzeug zu mehreren aufeinanderfolgenden Zeitpunkten auswerten. Die Steuereinrichtung kann auch die Relativgeschwindigkeit zwischen dem Kraftfahrzeug und dem weiteren Fahrzeug direkt aus den Sensordaten bestimmen. Hierzu kann beispielsweise eine Doppler-Verschiebung zwischen dem ausgesendeten Sendesignal und dem von dem Objekt reflektierten Sendesignal ermittelt werden. Ferner ist die Steuereinrichtung dazu ausgelegt, eine Geschwindigkeitsänderung auf Grundlage der Sensordaten zu bestimmen bzw. abzuschätzen. Die Geschwindigkeitsänderung beschreibt den Unterschied zwischen der Geschwindigkeit des Kraftfahrzeugs vor der Kollision und der Kollisionsgeschwindigkeit des Kraftfahrzeugs nach der Kollision. Mittels der Steuereinrichtung kann anhand der Sensordaten beispielsweise die relative Lage und/oder ein Geschwindigkeitsunterschied zwischen dem Kraftfahrzeug und dem weiteren Fahrzeug bestimmt werden. Hieraus kann dann die Geschwindigkeitsänderung abgeschätzt werden. Anhand der Geschwindigkeitsänderung kann dann die Steuereinrichtung eine Schwere der möglichen Kollision bestimmen. Diese Information kann beispielsweise dazu genutzt werden, entsprechende Insassenschutzeinrichtungen zum Schutz der Insassen bei der Kollision anzusteuern.

Gemäß der vorliegenden Erfindung ist es nun vorgesehen, dass mittels der Steuereinrichtung anhand der Sensordaten zusätzlich eine Masse des weiteren Fahrzeugs geschätzt wird. Diese geschätzte Masse wird zusätzlich bei der Bestimmung der Schwere der möglichen Kollision berücksichtigt. Dem liegt die Erkenntnis zugrunde, dass die Masse des weiteren Fahrzeugs, mit dem das Kraftfahrzeug gegebenenfalls kollidieren wird, einen erheblichen Einfluss auf die Schwere der möglichen Kollision hat. Die Masse des weiteren Fahrzeugs wirkt sich zudem deutlich auf die Geschwindigkeitsänderung aus. Dies gilt sowohl für den Fall, bei dem das Kraftfahrzeug auf das weitere Fahrzeug auffährt, als auch für den Fall, bei dem das weitere Fahrzeug auf das Kraftfahrzeug auffährt. Wenn das weitere Fahrzeug beispielsweise auf das Kraftfahrzeug auffährt, unterscheidet sich die Schwere der Kollision deutlich in Abhängigkeit von der Masse des weiteren Fahrzeugs. Wenn es sich bei dem weiteren Fahrzeug beispielsweise um ein Motorrad handelt, ist die Schwere der Kollision bei gleicher Relativgeschwindigkeit deutlich geringer, als wenn es sich bei dem weiteren Kraftfahrzeug um einen Lastkraftwagen handelt. Anhand der geschätzten Masse des weiteren Fahrzeugs kann zudem der Impuls bestimmt werden, den das weitere Fahrzeug auf das Kraftfahrzeug ausübt. Damit kann die Schwere der möglichen Kollision genauer bestimmt werden und somit können Insassenschutzeinrichtungen zuverlässiger angesteuert werden.

Die Sensordaten beschreiben zumindest eine Außenfläche des weiteren Fahrzeugs, mittels Steuereinrichtungen werden äußere Abmessungen des weiteren Fahrzeugs anhand der Sensordaten bestimmt und die Masse des weiteren Fahrzeugs wird anhand der bestimmten äußeren Abmessungen des weiteren Fahrzeugs geschätzt. Mit Hilfe eines Sensors, der beispielsweise als Radarsensor ausgebildet ist, werden die Außenflächen oder zumindest diejenigen Außenflächen, die dem Sensor zugewandt sind, erfasst. Hierbei kann es vorgesehen sein, dass mehrere aufeinanderfolgende Messzyklen durchgeführt werden, in denen jeweils die Außenflächen des weiteren Fahrzeugs erfasst werden. Anhand der Sensordaten werden dann die äußeren Abmessungen des weiteren Fahrzeugs bestimmt, beispielsweise kann die Länge, die Breite und/oder die Höhe des weiteren Fahrzeugs auf Grundlage der Sensordaten bestimmt bzw. geschätzt werden. Weiterhin kann es vorgesehen sein, dass das Volumen und/oder eine Grundfläche bzw. Aufstandsfläche des weiteren Fahrzeugs geschätzt wird. Anhand dieser Daten kann dann die Masse des Kraftfahrzeugs abgeschätzt werden. In dem Artikel "Analysis of the relationship between vehicle weigh/size and safety, and implications for federal fuel economy regulation" von T. Wenzel, 2010, ist beschrieben, dass anhand der äußeren Abmessungen eines Kraftfahrzeugs auf dessen Masse geschlossen werden kann. Hierzu können beispielsweise in einer entsprechenden Speichereinheit oder einer Look-Up Tabelle entsprechende Werte für die Masse hinterlegt sein. Damit kann die Masse des weiteren Fahrzeugs geschätzt werden.

Das weitere Fahrzeug wird anhand der Sensordaten einer vorbestimmten Fahrzeugklasse zugeordnet und die Masse des weiteren Fahrzeugs wird anhand der zugeordneten Fahrzeugklasse bestimmt. Alternativ oder zusätzlich kann es vorgesehen sein, dass anhand der Sensordaten eine Klassifizierung des Kraftfahrzeugs erfolgt. Diese kann beispielsweise auf Grundlage der äußeren Abmessungen und/oder anhand von charakteristischen Merkmalen des weiteren Fahrzeugs, die auf Grundlage der Sensordaten bestimmt wurden, erfolgen. Beispielsweise kann das weitere Fahrzeug der Klasse Motorrad, Kraftfahrzeug oder Lastkraftwagen zugeordnet werden. Auch hier kann es vorgesehen sein, dass in einer entsprechenden Speichereinheit bzw. Look-Up Tabelle der Steuereinrichtung typische Massen für die Fahrzeugklassen hinterlegt sind. Falls das Bestimmen der äußeren Abmessungen des Kraftfahrzeugs und/oder eine Klassifizierung des Kraftfahrzeugs gar nicht möglich ist, kann es auch vorgesehen sein, dass der Masse des Kraftfahrzeugs ein vorbestimmter Standardwert zugeordnet wird.

Erfindungsgemäß wird anhand der Sensordaten ein maximaler Lenkeinschlag des weiteren Fahrzeugs bestimmt und die Schwere der möglichen Kollision wird anhand des bestimmten Lenkeinschlags bestimmt. Zum Bestimmen des maximalen Lenkeinschlags kann insbesondere zunächst die zuvor beschriebene Klassifikation des weiteren Fahrzeugs durchgeführt werden. Hierbei wird berücksichtigt, dass beispielsweise der maximale Lenkeinschlag bei einem Motorrad größer ist als bei einem Lastkraftwagen. Anhand des maximalen Lenkeinschlags kann bestimmt werden, ob das weitere Fahrzeug, das sich dem Kraftfahrzeug von hinten nähert, dem Kraftfahrzeug durch eine entsprechende Lenkbewegung ausweichen kann. Somit kann bei der Bestimmung der Schwere der möglichen Kollision zudem der Aspekt berücksichtigt werden, dass das weitere Fahrzeug dem Kraftfahrzeug durch die Lenkbewegung ausweichen kann.

Gemäß einer weiteren Ausführungsform wird die Geschwindigkeit des Kraftfahrzeugs vor der Kollision und/oder eine Masse des Kraftfahrzeugs bestimmt und die Schwere der möglichen Kollision anhand der bestimmten Geschwindigkeit und/oder der Masse des Kraftfahrzeugs bestimmt. Die aktuelle Geschwindigkeit des Kraftfahrzeugs kann mittels der Steuereinrichtung beispielsweise auf Grundlage der Daten eines Geschwindigkeitssensors des Kraftfahrzeugs erfasst werden. Die Masse des Kraftfahrzeugs kann beispielsweise in der Speichereinheit der Steuereinrichtung hinterlegt sein. Ferner kann es vorgesehen sein, dass anhand der Sensordaten eine aktuelle Geschwindigkeit des weiteren Fahrzeugs bestimmt wird. Diese kann zudem aus der ermittelten Relativgeschwindigkeit und der bestimmten aktuellen Geschwindigkeit des Kraftfahrzeugs bestimmt werden. Somit kann der jeweilige Impuls des Kraftfahrzeugs und des weiteren Fahrzeugs bestimmt werden, der sich jeweils aus dem Produkt der Masse und der aktuellen Geschwindigkeit ergibt. Weiterhin können daraus die Geschwindigkeit des Kraftfahrzeugs und die Geschwindigkeit des weiteren Fahrzeugs nach der Kollision bestimmt werden. Hierbei kann berücksichtigt werden, dass die Kollision zum Teil elastisch und zum Teil unelastisch erfolgt. Dies ermöglicht eine zuverlässige Vorhersage der Schwere der möglichen Kollision.

Bevorzugt wird die Masse von einem weiteren Fahrzeug bestimmt, welches sich in Fahrtrichtung des Kraftfahrzeugs hinter dem Kraftfahrzeug befindet. Insbesondere wird die Masse von einem weiteren Fahrzeug bestimmt, welches sich in Vorwärtsfahrtrichtung des Kraftfahrzeugs hinter dem Kraftfahrzeug befindet. Mit anderen Worten soll die Schwere einer Kollision bestimmt werden, bei dem das weitere Fahrzeug von hinten auf das Kraftfahrzeug auffährt. In diesem Fall handelt es sich insbesondere um einen Auffahrunfall, der untersucht werden soll. Dabei ist es insbesondere vorgesehen, dass der zumindest eine Sensor in einem Heckbereich des Kraftfahrzeugs angeordnet ist. Mit diesem kann dann die Relativgeschwindigkeit zwischen dem Kraftfahrzeug und dem weiteren Fahrzeug und/oder eine relative Lage zwischen dem Kraftfahrzeug und dem weiteren Fahrzeug bestimmt werden. Zudem kann anhand der Sensordaten die Masse des weiteren Fahrzeugs hinter dem Kraftfahrzeug abgeschätzt werden. Anhand der Sensordaten kann dann die Geschwindigkeitsänderung zuverlässig bestimmt werden.

Gemäß einer weiteren Ausgestaltung wird anhand der Sensordaten eine relative Lage und/oder eine Relativgeschwindigkeit zwischen dem Kraftfahrzeug und dem weiteren Fahrzeug bestimmt, eine zeitliche Dauer bis zu einer möglichen Kollision anhand der bestimmten relativen Lage und/oder der Relativgeschwindigkeit bestimmt und die Schwere der Kollision zusätzlich anhand der zeitlichen Dauer bestimmt. Ferner kann ein Unterschied zwischen der Beschleunigung der Kraftfahrzeugs und der Beschleunigung des weitern Fahrzeugs bestimmt werden. Grundsätzlich kann es vorgesehen sein, dass die relative Lage, die Relativgeschwindigkeit und/oder die Beschleunigungsunterschiede bezüglich zweier Raumrichtungen bestimmt wird. Diese Raumrichtungen können beispielsweise einer Fahrzeuglängsachse und einer Fahrzeugquerachse zugeordnet werden. Anhand dieser Daten kann ferner eine zeitliche Dauer bis zu einer möglichen Kollision zwischen dem Kraftfahrzeug und dem weiteren Fahrzeug bestimmt werden. Diese zeitliche Dauer wird auch als Time To Collision (TTC) bezeichnet. Zudem kann es vorgesehen sein, dass anhand der relativen Lage, der Relativgeschwindigkeit und/oder der Beschleunigungsunterschiede eine Kollisionswahrscheinlichkeit bestimmt wird, welche beschreibt, wie wahrscheinlich eine Kollision zwischen dem Kraftfahrzeug und dem weiteren Fahrzeug ist. Somit kann die Schwere der möglichen Kollision zuverlässiger abgeschätzt werden.

Gemäß einer weiteren Ausführungsform wird anhand der Sensordaten eine maximale Verzögerung des weiteren Fahrzeugs bestimmt und die Schwere der möglichen Kollision wird anhand der bestimmten Verzögerung bestimmt. Anhand der geschätzten Masse und der Relativgeschwindigkeit zwischen dem Kraftfahrzeug und dem weiteren Kraftfahrzeug kann abgeschätzt werden, ob die Kollision durch eine Bremsung, die das weitere Fahrzeug durchführt, verhindert werden kann. Hierbei kann insbesondere das weitere Fahrzeug zunächst klassifiziert werden. Anhand der geschätzten Masse und/oder der Klassifikation des weiteren Fahrzeugs kann dann abgeschätzt werden, ob eine Kollision durch eine Bremsung des weiteren Fahrzeugs verhindert werden kann oder nicht.

Weiterhin ist es vorteilhaft, wenn eine Mehrzahl von Auftreffbereichen des Kraftfahrzeugs vorbestimmt wird und anhand der Sensordaten eine Auftreffgeschwindigkeit für jeden der vorbestimmten Auftreffbereiche bestimmt wird. Hierbei kann es insbesondere vorgesehen sein, dass der Heckbereich des Kraftfahrzeugs in eine Mehrzahl von Auftreffebereichen eingeteilt wird. Beispielsweise kann der Heckbereich in drei voneinander verschiedene Auftreffbereiche eingeteilt werden. Anhand der Sensordaten kann die relative Lage zwischen dem Kraftfahrzeug und dem weiteren Fahrzeug und/oder die Relativgeschwindigkeit ermittelt werden. Anhand dieser Daten kann eine Auftreffwahrscheinlichkeit für jeden der Auftreffbereiche ermittelt werden. Hierbei kann weiterhin der maximale Lenkeinschlag des weiteren Kraftfahrzeugs berücksichtigt werden. Somit kann zudem der Auftreffbereich bestimmt werden, auf den das weitere Fahrzeug möglicherweise auftrifft. Diese Information kann beispielsweise dazu genutzt werden, die Insassenschutzeinrichtungen entsprechend anzusteuern.

Eine erfindungsgemäße Steuereinrichtung für ein Kraftfahrzeug ist zum Durchführen eines erfindungsgemäßen Verfahrens ausgelegt. Die Steuereinrichtung kann beispielsweise durch ein elektronisches Steuergerät des Kraftfahrzeugs gebildet sein.

Ein erfindungsgemäßes Fahrerassistenzsystem für ein Kraftfahrzeug umfasst zumindest einen Sensor, insbesondere einen Radarsensor, und eine erfindungsgemäße Steuereinrichtung. Dabei ist das Fahrerassistenzsystem insbesondere dazu ausgelegt, in Abhängigkeit von der mittels der Steuereinrichtung bestimmten Geschwindigkeitsänderung zumindest eine Insassenschutzeinrichtung anzusteuern. Grundsätzlich kann das Fahrerassistenzsystem eine oder mehrere Insassenschutzeinrichtungen in Abhängigkeit von der mit der Steuereinrichtung bestimmten Schwere der möglichen Kollision zwischen dem Kraftfahrzeug und dem weiteren Fahrzeug ansteuern. Auf diese Weise können Verletzungen der Fahrzeuginsassen zuverlässig verhindert oder zumindest reduziert werden.

In einer Ausführungsform ist das Fahrerassistenzsystem dazu ausgelegt, eine Bremse des Kraftfahrzeugs zu lösen, falls die bestimmte Geschwindigkeitsänderung einen ersten Schwellenwert überschreitet, einen Gurtstraffer anzusteuern, falls die bestimmte Geschwindigkeitsänderung einen zweiten Schwellenwert überschreitet und/oder eine Position zumindest eines Teils einer Kopfstütze anzupassen, falls die bestimmte Geschwindigkeitsänderung einen dritten Schwellenwert überschreitet. Wenn die bestimmte Geschwindigkeitsänderung den ersten Schwellenwert überschreitet, der beispielsweise einer leichten Kollision zugeordnet ist, kann die Bremse des Kraftfahrzeugs gelöst werden. Damit kann erreicht werden, dass das Kraftfahrzeug nach der Kollision sich weiterbewegen kann. Wenn die Geschwindigkeitsänderung einen im Vergleich zum ersten Schwellenwert höheren, zweiten Schwellenwert überschreitet, kann ein Gurtstraffer angesteuert werden. Der zweite Schwellenwert kann beispielsweise einer mittelschweren Kollision zugeordnet werden. Wenn die Geschwindigkeitsänderung einen im Vergleich zum zweiten Schwellenwert höheren dritten Schwellenwert überschreitet kann eine Kopfstütze des Kraftfahrzeugs oder zumindest ein Teil der Kopfstütze derart verschwenkt werden, dass diese an einem Kopf des Insassen anliegt. Der dritte Schwellenwert kann beispielsweise einer schweren Kollision zugeordnet sein. Damit kann im Fall der Kollision erreicht werden, dass der Kopf des Fahrzeuginsassen an der Kopfstütze anliegt und somit ein Schleudertrauma verhindert werden kann.

Weiterhin ist es bevorzugt vorgesehen, dass das Fahrerassistenzsystem dazu ausgelegt ist, die Position des zumindest einen Teils der Kopfstütze in Abhängigkeit von den mit der Steuereinrichtung bestimmten Auftreffwahrscheinlichkeiten für die vorbestimmten Auftreffbereiche anzupassen. Somit kann beispielsweise berücksichtigt werden, ob das weitere Fahrzeug mittig oder seitlich auf das Heck des Kraftfahrzeugs auftreffen wird. In Abhängigkeit von dieser Information kann dann die Position zumindest eines Teils der Kopfstütze angepasst werden. Auf diese Weise kann ein Schleudertrauma eines Fahrzeuginsassen zuverlässig verhindert werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:

Fig. 1 in schematischer Darstellung ein Kraftfahrzeug gemäß einer Ausführungsform der vorliegenden Erfindung, welches ein Fahrerassistenzsystem aufweist;

Fig. 2 eine Kollision des Kraftfahrzeugs mit einem weiteren Fahrzeug, wobei die Kollision als unelastischer Stoß betrachtet wird;

Fig. 3 eine Kollision zwischen dem Kraftfahrzeug und dem weiteren Fahrzeug, wobei die Kollision als elastischer Stoß betrachtet wird; und

Fig. 4 das Kraftfahrzeug hinter dem sich das weitere Fahrzeug befindet, wobei eine Kollision zwischen dem Kraftfahrzeug und dem weiteren Fahrzeug droht.

In den Figuren werden gleiche und funktionsgleiche Elemente mit gleichen Bezugszeichen versehen.

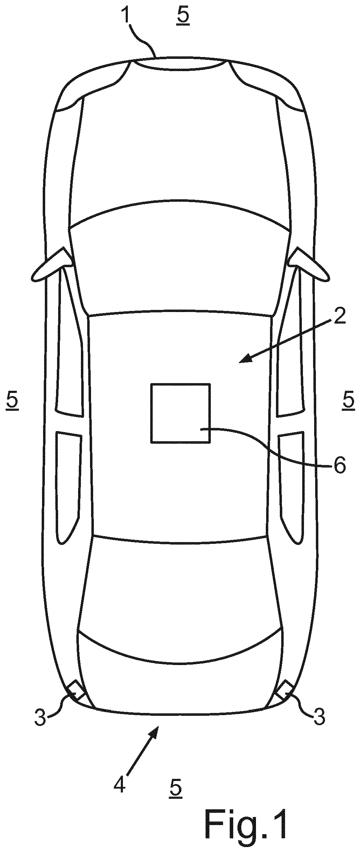

Fig. 1 zeigt ein Kraftfahrzeug 1 gemäß einer Ausführungsform der vorliegenden Erfindung. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst zumindest einen Sensor 3. In dem vorliegenden Ausführungsbeispiel umfasst das Fahrerassistenzsystem 2 zwei Sensoren 3, die jeweils als Radarsensoren ausgebildet sind. Dabei sind die Sensoren 3 in einem Heckbereich 4 des Kraftfahrzeugs 1 angeordnet. Die Sensoren 3 können beispielsweise verdeckt hinter einem Stoßfänger des Kraftfahrzeugs 1 verbaut sein.

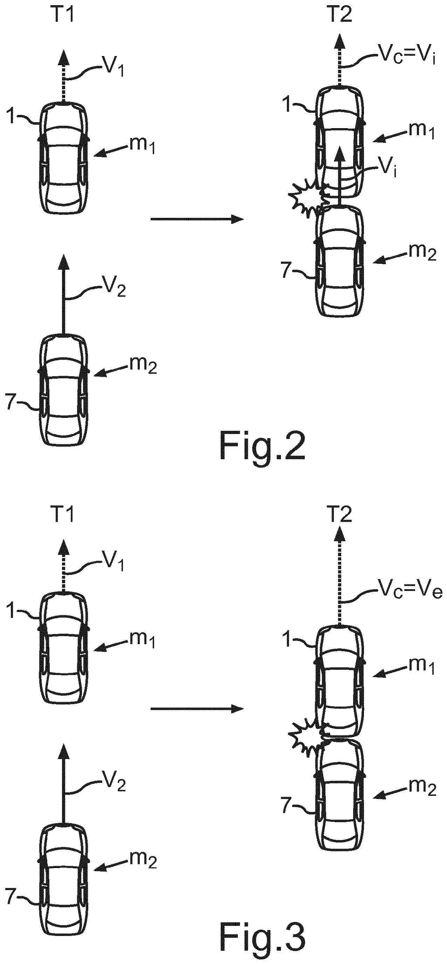

Mit den jeweiligen Sensoren 3 bzw. den Radarsensoren kann ein Sendesignal in Form einer elektromagnetischen Strahlung ausgesendet werden. Dieses Sendesignal kann dann von einem Objekt in einem Umgebungsbereich 5 des Kraftfahrzeugs 1 reflektiert werden. Anhand der Laufzeit zwischen dem Aussenden des Sendesignals und dem Empfangen des reflektierten Sendesignals kann dann ein Abstand zwischen dem Kraftfahrzeug 1 und dem Objekt bestimmt werden. Zudem können die Sensoren 3 dazu ausgelegt sein, anhand einer Doppler-Verschiebung zwischen dem ausgesendeten Sendesignal und dem von dem Objekt reflektierten Sendesignal eine Relativgeschwindigkeit zwischen dem Kraftfahrzeug 1 und dem Objekt zu bestimmen. Mit den Sensoren 3 kann insbesondere ein weiteres Fahrzeug 7 als das Objekt erfasst werden (siehe Fig. 2).

Ferner umfasst das Fahrerassistenzsystem 2 eine Steuereinrichtung 6, die beispielsweise durch ein elektronisches Steuergerät des Kraftfahrzeugs 1 gebildet ist. Die Steuereinrichtung 6 wird zur Datenübertragung mit den Sensoren 3 verbunden. Entsprechende Datenleitungen sind vorliegend der Übersichtlichkeit halber nicht dargestellt. Somit können von den Sensoren 3 Sensordaten, die das Objekt bzw. das weitere Fahrzeug 7 in dem Umgebungsbereich 5 beschreiben, an die Steuereinrichtung 6 übertragen werden. Die Steuereinrichtung 6 kann dann anhand der Sensordaten die Relativgeschwindigkeit zwischen dem Kraftfahrzeug 1 und dem Objekt bestimmen. Zudem kann die Steuereinrichtung 6 eine aktuelle Geschwindigkeit $V_1$ des Kraftfahrzeugs 1 bestimmen. Zu diesem Zweck können beispielsweise entsprechende Daten eines Geschwindigkeitssensors an die Steuereinrichtung 6 übertragen werden.

Mit Hilfe der Steuereinrichtung 6 bzw. des Fahrerassistenzsystems 2 soll nun eine Schwere einer möglichen Kollision zwischen dem Kraftfahrzeug 1 und dem weiteren Fahrzeug 7 bestimmt werden. Dabei wird insbesondere der Fall betrachtet, bei dem sich das weitere Fahrzeug 7 in Fahrtrichtung des Kraftfahrzeugs 1 hinter dem Kraftfahrzeug 1 befindet. Dies ist in Fig. 2 dargestellt. Zu einem Zeitpunkt T1 befindet sich das weitere Fahrzeug 7 hinter dem Kraftfahrzeug 1. Das Kraftfahrzeug 1 bewegt sich mit der Geschwindigkeit $V_1$ und weist eine Masse $m_1$ auf. Das weitere Fahrzeug 7 bewegt sich mit einer Geschwindigkeit $V_2$ und weist eine Masse m2 auf. Zu einem Zeitpunkt T2 tritt eine Kollision zwischen dem Kraftfahrzeug 1 und dem weiteren Fahrzeug 7 auf. Dabei trifft das weitere Fahrzeug 7 auf den Heckbereich 4 des Kraftfahrzeugs 1. Vorliegend wird die Kollision als unelastischer Stoß betrachtet. Nach der Kollision weisen sowohl das Kraftfahrzeug 1 als auch das weitere Fahrzeug 7 eine Geschwindigkeit $V_i$ auf. In diesem Fall entspricht die Geschwindigkeit $V_i$ einer Kollisionsgeschwindigkeit $V_c$, welche die Geschwindigkeit des Kraftfahrzeugs 1 nach der Kollision beschreibt. Diese Geschwindigkeit $V_i$ kann nach folgender Formel bestimmt werden:

$$V_i = \frac{m_1 V_1 + m_2 V_2}{m_1 + m_2}.$$

Im Vergleich hierzu zeigt Fig. 3 den Fall, bei der die Kollision als elastischer Stoß betrachtet wird. Hierbei wird davon ausgegangen, dass der gesamte Impuls bei der Kollision von dem weiteren Fahrzeug 7 auf das Kraftfahrzeug 1 übertragen wird. Hierbei bleibt das weitere Fahrzeug 7 stehen und das Kraftfahrzeug 1 bewegt sich mit der Geschwindigkeit $V_e$. Hier entspricht die Geschwindigkeit $V_e$ der Kollisionsgeschwindigkeit $V_c$ des Kraftfahrzeugs 1. Diese Geschwindigkeit $V_e$ kann nach folgender Formel bestimmt werden:

$$V_e = \frac{m_1 V_1 + m_2 V_2}{m_1}.$$

Grundsätzlich kann die Kollision zwischen dem Kraftfahrzeug 1 und dem weiteren Fahrzeug 7 weder als elastischer Stoß noch als unelastischer Stoß betrachtet werden. Die Kollisionsgeschwindigkeit $V_C$ des Kraftfahrzeugs 1 nach der Kollision können auf Grundlage einer Kombination aus einem elastischen Stoß und einem unelastischen Stoß bestimmt werden. Hierbei haben Studien gezeigt, dass die Kollision bei höheren Relativgeschwindigkeiten im Wesentlichen unelastisch betrachtet werden kann. Bei niedrigeren Relativgeschwindigkeiten folgt die Kollision gemäß einem elastischen Stoß. Die Kollisionsgeschwindigkeit $V_c$ des Kraftfahrzeugs 1 nach der Kollision können nach folgender Formel bestimmt werden:

$$V_c = C_f V_i + (1 - C_f) V_e.$$

Dabei beschreibt $C_f$ einen Parameter der in Abhängigkeit von der Relativgeschwindigkeit zwischen dem Kraftfahrzeug 1 und dem weiteren Fahrzeug 7 variiert. Der Parameter $C_f$ kann beispielsweise auf einer Speichereinheit der Steuereinrichtung 6 hinterlegt sein.

Um die Schwere der Kollision zwischen dem Kraftfahrzeug 1 und dem weiteren Fahrzeug 7 bestimmen zu können, wird eine Geschwindigkeitsänderung bestimmt. Diese Geschwindigkeitsänderung beschreibt den Geschwindigkeitsunterschied des Kraftfahrzeugs 1 vor und nach der Kollision. Die Geschwindigkeitsänderung beschreibt also die Differenz zwischen der Geschwindigkeit $V_1$ vor der Kollision und der Kollisionsgeschwindigkeit $V_c$. Dies erfolgt anhand der Sensordaten der Sensoren 3. Anhand der Sensordaten kann mittels der Steuereinrichtung 6 die Relativgeschwindigkeit zwischen dem Kraftfahrzeug 1 und dem weiten Fahrzeug 7 bestimmt werden. Die aktuelle Geschwindigkeit $V_1$ des Kraftfahrzeugs 1 kann mit Hilfe eines entsprechenden Geschwindigkeitssensors des Kraftfahrzeugs 1 bestimmt werden. Aus der Differenz der Relativgeschwindigkeit und der Geschwindigkeit $V_1$ des Kraftfahrzeugs 1 kann dann die Geschwindigkeit $V_2$ des weiteren Fahrzeugs 7 bestimmt werden. Die Masse $m_1$ des Kraftfahrzeugs 1 kann beispielsweise in der Steuereinrichtung 6 hinterlegt sein.

Zudem wird die Masse $m_2$ des weiteren Fahrzeugs 7 abgeschätzt. Hierzu können anhand der Sensordaten die räumlichen Abmessungen des weiteren Fahrzeugs 7 bestimmt werden. Insbesondere kann anhand der Sensordaten die Länge, die Breite und/oder die Höhe des weiteren Fahrzeugs 7 ermittelt werden. Hierzu können beispielsweise zeitlich aufeinanderfolgende Messzyklen durchgeführt werden, in denen jeweilige Außenflächen des weiteren Fahrzeugs 7 anhand der Sensordaten erkannt bzw. bestimmt werden. Weiterhin kann es vorgesehen sein, dass eine Klassifizierung des weiteren Fahrzeugs 7 anhand der Sensordaten durchgeführt wird. Dabei kann das weitere Fahrzeug 7 beispielsweise der Klasse Motorrad, Kraftfahrzeug oder Lastkraftwagen zugeordnet werden.

Bei dem Schätzen der Masse $m_2$ des weiteren Fahrzeugs 7 kann zudem ein Konfidenzwert angegeben werden, der beschreibt, wie zuverlässig die Masse m2 bestimmt wurde. Hierbei kann beispielsweise auch berücksichtigt werden, ob das weitere Fahrzeug 7 vollständig oder nur teilweise mit Hilfe der Sensoren 3 erfasst werden konnte. Beispielsweise kann berücksichtigt werden, dass Teile des weiteren Fahrzeugs 7 durch ein Hindernis verdeckt sind. Wenn der Konfidenzwert beispielsweise einen vorbestimmten Schwellenwert unterschreitet, kann davon ausgegangen werden, dass die Masse m2 des weiteren Fahrzeugs 7 nicht zuverlässig bestimmt werden kann. In diesem Fall wird für die Masse $m_2$ des weiteren Fahrzeugs 7 ein Standardwert angenommen.

Aus der Geschwindigkeit $V_1$ des Kraftfahrzeugs 1, der Geschwindigkeit $V_2$ des weitern Fahrzeugs 7, der Masse $m_1$ des Kraftfahrzeugs 1 und der Masse $m_2$ des weiteren Fahrzeugs 7 kann anhand der oben beschriebenen Formeln die Kollisionsgeschwindigkeit $V_c$ bestimmt werden. Aus der Kollisionsgeschwindigkeit $V_c$ kann wiederum die Geschwindigkeitsänderung ermittelt werden. Auf Grundlage der Geschwindigkeitsänderung kann dann die Schwere der Kollision abgeschätzt werden.

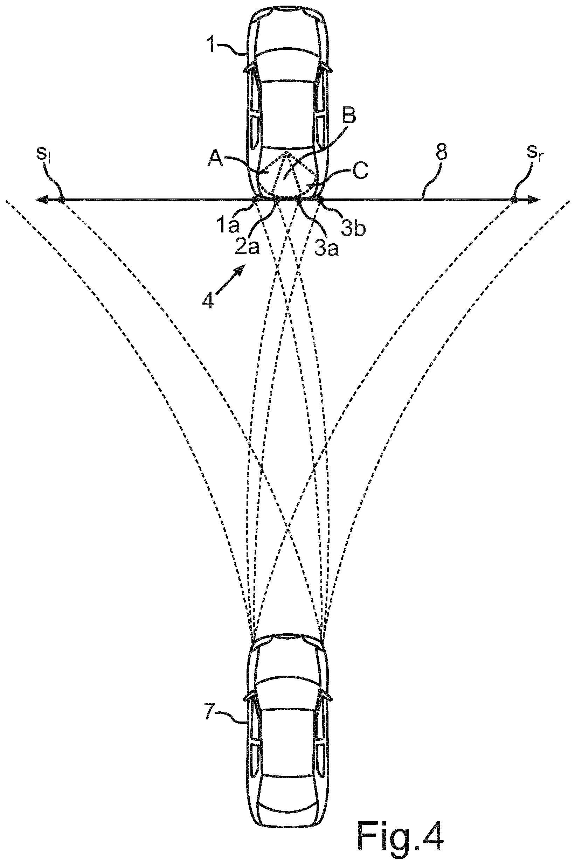

Weiterhin kann es vorgesehen sein, dass eine Kollisionswahrscheinlichkeit zwischen dem Kraftfahrzeug 1 und dem weiteren Fahrzeug 7 bestimmt wird. Hierzu kann mittels der Steuereinrichtung 6 anhand der Sensordaten eine relative Lage zwischen dem Kraftfahrzeug 1 und dem weiteren Fahrzeug 7 bestimmt werden. Zudem kann die Relativgeschwindigkeit zwischen dem Kraftfahrzeug 1 und dem weiteren Fahrzeug 7 bzw. die Geschwindigkeit $V_1$ des Kraftfahrzeugs 1 und die Geschwindigkeit $V_2$ des weiteren Fahrzeugs 7 bestimmt werden. Des Weiteren kann die aktuelle Beschleunigung des weiteren Fahrzeugs 7 anhand der Sensordaten bestimmt werden. Anhand dieser Daten kann dann eine zeitliche Dauer bis zur Kollision bestimmt werden. Dabei kann es weiterhin vorgesehen sein, dass ein maximaler Lenkeinschlag $s_l$ in eine erste Richtung bzw. nach links und ein maximaler Lenkeinschlag $s_r$ in eine zweite Richtung bzw. nach rechts für das weitere Fahrzeug 7 bestimmt wird. Zum Bestimmen des maximalen Lenkeinschlags $s_l$, $s_r$ können die Informationen aus der Klassifikation des weiteren Fahrzeugs 7 herangezogen werden. Zudem ist es insbesondere vorgesehen, dass eine maximale Verzögerung des weiteren Fahrzeugs 7 bestimmt wird. Damit kann bestimmt werden, ob das weitere Fahrzeug 7 durch eine entsprechende Lenkbewegung und/oder eine Bremsung die Kollision mit dem Kraftfahrzeug 1 verhindern kann. Dies ist schematisch in Fig. 4 dargestellt.

In dem Heckbereich 4 des Kraftfahrzeugs 1 sind ferner zudem Auftreffbereiche A, B, C vorgegeben. Vorliegend soll für jeden der Auftreffbereiche A, B, C eine Auftreffwahrscheinlichkeit bestimmt werden. Hierbei beschreibt der Pfeil 8 mögliche Punkte, die das weitere Fahrzeug 7 bei seiner Bewegung schneiden kann. Der Pfeil 8 erstreckt sich vorliegend entlang des Heckbereichs 4 des Kraftfahrzeugs 1 senkrecht zu einer Längsachse des Kraftfahrzeugs 1. Zum Bestimmen der Auftreffwahrscheinlichkeit kann eine entsprechende Wahrscheinlichkeit genutzt werden. Die Wahrscheinlichkeit, dass die Kollision durch eine Lenkbewegung des weiteren Fahrzeugs 7 verhindert wird, kann gemäß einer Normalverteilung beschrieben werden, die sich zwischen maximalen Lenkeinschlägen $s_l$ und $s_r$ erstreckt. Dabei kann sich das Kraftfahrzeug 1 beispielsweise in einem Intervall mit einer Abweichung von +/- 3 $\sigma$ befinden.

Zum Bestimmen der Wahrscheinlichkeit, dass die Kollision vermieden wird, kann die Wahrscheinlichkeitsverteilungsfunktion zwischen dem Punkt $s_1$ und dem Punkt 1a aufintegriert werden. Zudem kann die Wahrscheinlichkeitsverteilungsfunktion zwischen dem Punkt 3b und dem Punkt $s_r$ aufintegriert werden. Aus der Summe dieser beiden Bereiche ergibt sich die Wahrscheinlichkeit, dass die Kollision vermieden wird bzw. nicht stattfindet. Ferner kann die Wahrscheinlichkeitsverteilungsfunktion zwischen Punkt 1a und 2a integriert werden, um die Auftreffwahrscheinlichkeit für den Auftreffbereich A zu bestimmen. Durch das Aufintegrieren der Wahrscheinlichkeitsverteilungsfunktion zwischen den Punkten 2a und 3a kann die Auftreffwahrscheinlichkeit für den Auftreffbereich B bestimmt werden. Durch das Aufintegrieren der Wahrscheinlichkeitsverteilungsfunktion zwischen den Bereichen 3a und 3b kann die Auftreffwahrscheinlichkeit für den Auftreffbereich C bestimmt werden.

Mit Hilfe des Fahrerassistenzsystems 2 können entsprechende Insassenschutzeinrichtungen angesteuert werden. Dabei kann die Ansteuerung der Insassenschutzeinrichtungen in Abhängigkeit von der bestimmten Geschwindigkeitsänderung erfolgen. Wenn die Geschwindigkeitsänderung einen ersten Schwellenwert überschreitet, kann beispielsweise die Bremse des Kraftfahrzeugs 1 gelöst werden. In diesem Fall liegt eine leichte Kollision vor. Wenn die Geschwindigkeitsänderung einen zweiten Schwellenwert überschreitet, kann ein Gurtstraffer angesteuert werden. In diesem Fall liegt eine mittelschwere Kollision vor. Wenn die Geschwindigkeitsänderung einen dritten Schwellenwert überschreitet, kann zumindest ein Teil einer Kopfstütze angepasst werden, so dass dieser den Kopf eines Insassen abstützt. Hierbei liegt eine schwere Kollision vor. Dabei kann es insbesondere vorgesehen sein, dass die Position des zumindest einen Teils der Kopfstütze in Abhängigkeit von den Auftreffwahrscheinlichkeiten für die Auftreffbereiche A, B, C bestimmt wird. Auf diese Weise kann ein Schleudertrauma zuverlässig vermieden werden.

Vorliegend ist das Bestimmen der Schwere der Kollision zwischen dem Kraftfahrzeug 1 und dem weiteren Fahrzeug 7 für den Fall beschrieben, dass das weitere Fahrzeug 7 auf den Heckebereich 4 des Kraftfahrzeugs 1 trifft. Das vorliegende Prinzip kann auf anderen Arten von Kollisionen zwischen dem Kraftfahrzeug 1 und dem weiteren Fahrzeug 7 erweitert werden. Beispielsweise können die Sensoren 3 derart angeordnet sein, dass sie auch einen Frontbereich und/oder einen Seitenbereich des Kraftfahrzeugs 1 überwachen können. Grundsätzlich können mithilfe des Verfahrens auch weitere Insassenschutzeinrichtungen, wie beispielsweise Airbags, angesteuert werden können.

**Patentansprüche**

1.    Verfahren zum Bestimmen einer Schwere einer möglichen Kollision zwischen einem Kraftfahrzeug (1) und einem weiteren Fahrzeug (7), bei welchem mittels einer Steuereinrichtung (6) von zumindest einem Sensor (3) des Kraftfahrzeugs (1) Sensordaten empfangen werden, welche das weitere Fahrzeug (7) beschreiben, anhand der Sensordaten eine Geschwindigkeitsänderung, welche einen Unterschied zwischen einer Geschwindigkeit ($V_1$) des Kraftfahrzeugs (1) vorder Kollision und einer Kollisionsgeschwindigkeit ($V_c$) des Kraftfahrzeugs (1) nach der Kollision beschreibt, bestimmt wird und die Schwere der möglichen Kollision anhand der bestimmten Geschwindigkeitsänderung bestimmt wird, wobei mittels der Steuereinrichtung (6) anhand der Sensordaten eine Masse ($m_2$) des weiteren Fahrzeugs (7) geschätzt wird und die Schwere der möglichen Kollision zusätzlich anhand der geschätzten Masse ($m_2$) bestimmt wird, **dadurch gekennzeichnet, dass** die Sensordaten zumindest eine Außenfläche des weiteren Fahrzeugs (7) beschreiben, mittels der Steuereinrichtung (6) äußere Abmessungen des weiteren Fahrzeugs (7) anhand der Sensordaten bestimmt werden und die Masse ($m_2$) des weiteren Fahrzeugs (7) anhand der bestimmten äußeren Abmessungen des weiteren Fahrzeugs (7) geschätzt wird, dass das weitere Fahrzeug (7) anhand der Sensordaten einer vorbestimmten Fahrzeugklasse zugeordnet wird und die Masse ($m_2$) des weiteren Fahrzeugs (7) anhand der zugeordneten Fahrzeugklasse bestimmt wird, und dass anhand der Sensordaten ein maximaler Lenkeinschlag ($s_l$, $s_r$) des weiteren Fahrzeugs (7) bestimmt wird und die Schwere der möglichen Kollision anhand des bestimmten Lenkeinschlags ($s_l$, $s_r$) bestimmt wird.

2. Verfahren nach Anspruch 1,
**dadurch gekennzeichnet, dass**
die Geschwindigkeit ($V_1$) des Kraftfahrzeugs (1) vor der Kollision und/oder eine Masse ($m_1$) des Kraftfahrzeugs (1) bestimmt wird und die Schwere der möglichen Kollision anhand der bestimmten Geschwindigkeit ($V_1$) und/oder der Masse ($m_1$) des Kraftfahrzeugs (1) bestimmt wird.

3. Verfahren nach einem der vorhergehenden Ansprüche,
**dadurch gekennzeichnet, dass**
die Masse ($m_2$) von einem weiteren Fahrzeug (7) bestimmt wird, welches sich Fahrtrichtung des Kraftfahrzeugs (1) hinter dem Kraftfahrzeug (1) befindet.

4. Verfahren nach einem der vorhergehenden Ansprüche,
**dadurch gekennzeichnet, dass**
anhand der Sensordaten eine relative Lage und/oder eine Relativgeschwindigkeit zwischen dem Kraftfahrzeug (1) und dem weiteren Fahrzeug (7) bestimmt wird, eine zeitliche Dauer bis zu der möglichen Kollision anhand der bestimmten relativen Lage und/oder der Relativgeschwindigkeit bestimmt wird und die Schwere der möglichen Kollision anhand der zeitlichen Dauer bestimmt wird.

5. Verfahren nach einem der vorhergehenden Ansprüche,
**dadurch gekennzeichnet, dass**
anhand der Sensordaten eine maximale Verzögerung des weiteren Fahrzeugs (7) bestimmt wird und die Schwere der möglichen Kollision anhand der bestimmten Verzögerung bestimmt wird.

6. Verfahren nach einem der vorhergehenden Ansprüche,
**dadurch gekennzeichnet, dass**
eine Mehrzahl von Auftreffbereichen (A, B, C) des Kraftfahrzeugs (1) vorbestimmt wird und anhand der Sensordaten eine Auftreffwahrscheinlichkeit für jeden der vorbestimmten Auftreffbereiche (A, B, C) bestimmt wird.

7. Steuereinrichtung (6) für ein Kraftfahrzeug (1), wobei die Steuereinrichtung (6) dazu ausgelegt ist eine Schwere einer möglichen Kollision zwischen dem Kraftfahrzeug (1) und einem weiteren Fahrzeug (7) zu bestimmen, wobei die Steuereinrichtung (6) dazu ausgelegt ist von zumindest einem Sensor (3) des Kraftfahrzeugs (1) Sensordaten zu empfangen, welche das weitere Fahrzeug (7) beschreiben, anhand der Sensordaten eine Geschwindigkeitsänderung, welche einen Unterschied zwischen einer Geschwindigkeit ($V_1$) des Kraftfahrzeugs (1) vor der Kollision und einer Kollisionsgeschwindigkeit ($V_c$) des Kraftfahrzeugs (1) nach der Kollision beschreibt, zu bestimmen und die Schwere der möglichen Kollision anhand der bestimmten Geschwindigkeitsänderung zu bestimmen,
wobei die Steuereinrichtung (6) dazu ausgelegt ist anhand der Sensordaten eine Masse ($m_2$) des weiteren Fahrzeugs (7) zu schätzen und die Schwere der möglichen Kollision zusätzlich anhand der geschätzten Masse ($m_2$) zu bestimmen, **dadurch gekennzeichnet, dass**
die Sensordaten zumindest eine Außenfläche des weiteren Fahrzeugs (7) beschreiben, wobei die Steuereinrichtung (6) dazu ausgelegt ist die äußere Abmessungen des weiteren Fahrzeugs (7) anhand der Sensordaten zu bestimmen und die Masse ($m_2$) des weiteren Fahrzeugs (7) anhand der bestimmten äußeren Abmessungen des weiteren Fahrzeugs (7) zu schätzen, dass das weitere Fahrzeug (7) anhand der Sensordaten einer vorbestimmten Fahrzeugklasse zugeordnet wird und die Masse ($m_2$) des weiteren Fahrzeugs (7) anhand der zugeordneten Fahrzeugklasse bestimmt wird, und dass anhand der Sensordaten ein maximaler Lenkeinschlag ($s_l$, $s_r$) des weiteren Fahrzeugs (7) bestimmt wird und die Schwere der möglichen Kollision anhand des bestimmten Lenkeinschlags ($s_l$, $s_r$) bestimmt wird.

8. Fahrerassistenzsystem (2) für ein Kraftfahrzeug (1) mit zumindest einem Sensor (3), insbesondere einem Radarsensor, und mit einer Steuereinrichtung (6) nach Anspruch 7.

9. Fahrerassistenzsystem (2) nach Anspruch 8,
**dadurch gekennzeichnet, dass**
das Fahrerassistenzsystem (2) dazu ausgelegt ist, in Abhängigkeit von der mittels der Steuereinrichtung bestimmten Geschwindigkeitsänderung zumindest eine Insassenschutzeinrichtung anzusteuern.

10. Fahrerassistenzsystem (2) nach Anspruch 9,
**dadurch gekennzeichnet, dass**
das Fahrerassistenzsystem (2) dazu ausgelegt ist, eine Bremse des Kraftfahrzeugs (1) zu lösen, falls die bestimmte Geschwindigkeitsänderung, einen ersten Schwellenwert überschreitet, einen Gurtstraffer anzusteuern, falls die bestimmte Geschwindigkeitsänderung, einen zweiten Schwellenwert überschreitet und/oder eine Position zumindest eines Teils einer Kopfstütze anzupassen, falls die bestimmte Geschwindigkeitsänderung, einen dritten Schwellenwert überschreitet.

11. Fahrerassistenzsystem (2) nach Anspruch 10, **dadurch gekennzeichnet, dass** das Fahrerassistenzsystem (2) dazu ausgelegt ist, die Position des zumindest einen Teils der Kopfstütze in Abhängigkeit von den mit der Steuereinrichtung (6) bestimmten Auftreffwahrscheinlichkeiten für die vorbestimmten Auftreffbereiche (A, B, C) anzupassen.

12. Kraftfahrzeug (1) mit einem Fahrerassistenzsystem (2) nach einem der Ansprüche 8 bis 11.

**Claims**

1. Method for determining the severity of a possible collision between a motor vehicle (1) and another vehicle (7), in which sensor data which describe the other vehicle (7) are received from at least one sensor (3) of the motor vehicle (1) by means of a control apparatus (6), a change in velocity which describes a difference between a velocity ($V_1$) of the motor vehicle (1) before the collision and a collision velocity ($V_c$) of the motor vehicle (1) after the collision is determined on the basis of the sensor data, and the severity of the possible collision is determined on the basis of the determined change in velocity, wherein a mass ($m_2$) of the other vehicle (7) is estimated by means of the control apparatus (6) on the basis of the sensor data, and the severity of the possible collision is additionally determined on the basis of the estimated mass ($m_2$), **characterized in that** the sensor data describe at least one outer surface of the other vehicle (7), by means of the control apparatus (6) external dimensions of the other vehicle (7) are determined on the basis of the sensor data, and the mass ($m_2$) of the other vehicle (7) is estimated on the basis of the determined external dimensions of the other vehicle (7), **in that** the other vehicle (7) is assigned to a predetermined vehicle class on the basis of the sensor data, and the mass ($m_2$) of the other vehicle (7) is determined on the basis of the assigned vehicle class, and **in that** a maximum steering lock ($s_l$, $s_r$) of the other vehicle (7) is determined on the basis of the sensor data, and the severity of the possible collision is determined on the basis of the determined steering lock ($s_l$, $s_r$).

2. Method according to Claim 1, **characterized in that** the velocity ($V_1$) of the motor vehicle (1) before the collision and/or a mass ($m_1$) of the motor vehicle (1) are/is determined, and the severity of the possible collision is determined on the basis of the determined velocity ($V_1$) and/or the mass ($m_1$) of the motor vehicle (1).

3. Method according to either of the preceding claims, **characterized in that** the mass ($m_2$) of another vehicle (7) which is located behind the motor vehicle (1) in the direction of travel of the motor vehicle (1) is determined.

4. Method according to one of the preceding claims, **characterized in that** a relative position and/or a relative velocity between the motor vehicle (1) and the other vehicle (7) are/is determined on the basis of the sensor data, a time period up to the possible collision is determined on the basis of the determined relative position and/or the relative velocity, and the severity of the possible collision is determined on the basis of the time period.

5. Method according to one of the preceding claims, **characterized in that** a maximum deceleration of the other vehicle (7) is determined on the basis of the sensor data, and the severity of the possible collision is determined on the basis of the determined deceleration.

6. Method according to one of the preceding claims, **characterized in that** a multiplicity of impact areas (A, B, C) of the motor vehicle (1) are predetermined, and an impact probability is determined for each of the predetermined impact areas (A, B, C) on the basis of the sensor data.

7. Control apparatus (6) for a motor vehicle (1), wherein the control apparatus (6) is configured to determine the severity of a possible collision between the motor vehicle (1) and another vehicle (7), wherein the control apparatus (6) is configured to receive sensor data which describe the other vehicle (7) from at least one sensor (3) of the motor vehicle (1), to determine a change in velocity which describes a difference between a velocity ($V_1$) of the motor vehicle (1) before the collision and a collision velocity ($V_c$) of the motor vehicle (1) after the collision on the basis of the sensor data, and to determine the severity of the possible collision on the basis of the determined change in velocity, wherein the control apparatus (6) is configured to estimate a mass ($m_2$) of the other vehicle (7) on the basis of the sensor data, and to additionally determine the severity of the possible collision on the basis of the estimated mass ($m_2$), **characterized in that** the sensor data describe at least one outer surface of the other vehicle (7), wherein the control apparatus (6) is configured to determine the external dimensions of the other vehicle (7) on the basis of the sensor data, and to estimate the mass ($m_2$) of the other vehicle (7) on the basis of the determined external dimensions of the other vehicle (7), **in that** the other vehicle (7) is assigned to a predetermined vehicle class on the basis of the sensor data, and the mass $(m_2)$ of the other vehicle (7) is determined on the basis of the assigned vehicle class, and **in that** a maximum steering lock $(s_l, s_r)$ of the other vehicle (7) is determined on the basis of the sensor data, and the severity of the possible collision is determined on the basis of the determined steering lock $(s_l, s_r)$.

8. Driver assistance system (2) for a motor vehicle (1) having at least one sensor (3), in particular one radar sensor, and having a control apparatus (6) according to Claim 7.

9. Driver assistance system (2) according to Claim 8, **characterized in that**
the driver assistance system (2) is configured to actuate at least one vehicle occupant protection apparatus as a function of the change in velocity which is determined by means of the control apparatus.

10. Driver assistance system (2) according to Claim 9, **characterized in that**
the driver assistance system (2) is configured to release a brake of the motor vehicle (1) if the determined change in velocity exceeds a first threshold value, to actuate a belt pretensioner if the determined change in velocity exceeds a second threshold value, and/or to adapt a position of at least one part of a headrest if the determined change in velocity exceeds a third threshold value.

11. Driver assistance system (2) according to Claim 10, **characterized in that**
the driver assistance system (2) is configured to adapt the position of the at least one part of the headrest as a function of the impact probabilities, determined with the control apparatus (6), for the predetermined impact areas (A, B, C).

12. Motor vehicle (1) having a driver assistance system (2) according to one of Claims 8 to 11.

**Revendications**

1. Procédé permettant de déterminer la gravité d'une collision possible entre un véhicule automobile (1) et un autre véhicule (7), dans lequel des données de capteur décrivant l'autre véhicule (7) sont reçues d'au moins un capteur (3) du véhicule automobile (1) au moyen d'un dispositif de commande (6), à l'aide des données de capteur, une variation de vitesse, qui décrit une différence entre une vitesse $(V_1)$ du véhicule automobile (1) avant la collision et une vitesse de collision (V) du véhicule automobile (1) après la collision, est déterminée
et la gravité de l'éventuelle collision est déterminée à l'aide de la variation de vitesse déterminée, dans lequel, au moyen du dispositif de commande (6) et à l'aide des données de capteur, une masse $(m_2)$ de l'autre véhicule (7) est estimée et la gravité de l'éventuelle collision est en outre déterminée à l'aide de la masse estimée $(m_2)$,
**caractérisé en ce que**
les données de capteur décrivent au moins une surface extérieure de l'autre véhicule (7), les dimensions extérieures de l'autre véhicule (7) sont déterminées à l'aide des données de capteur au moyen du dispositif de commande (6) et la masse $(m_2)$ de l'autre véhicule (7) est estimée à l'aide des dimensions extérieures déterminées de l'autre véhicule (7), **en ce que** l'autre véhicule (7) est associé à une classe de véhicule prédéterminée à l'aide des données de capteur et la masse $(m_2)$ de l'autre véhicule (7) est déterminée à l'aide de la classe de véhicule associée, et **en ce qu'**un angle de braquage maximal $(s_l, s_r)$ de l'autre véhicule (7) est déterminé à l'aide des données de capteur et la gravité de l'éventuelle collision est déterminée à l'aide de l'angle de braquage déterminé $(s_l, s_r)$.

2. Procédé selon la revendication 1,
**caractérisé en ce que** la vitesse $(V_1)$ du véhicule automobile (1) avant la collision et/ou une masse $(m_1)$ du véhicule automobile (1) est déterminée et **en ce que** la gravité de l'éventuelle collision est déterminée à l'aide de la vitesse $(V_1)$ et/ou de la masse $(m_1)$ du véhicule automobile (1) déterminée(s).

3. Procédé selon l'une des revendications précédentes, **caractérisé en ce que** la masse $(m_2)$ est déterminée par un autre véhicule (7), qui est situé derrière le véhicule automobile (1) dans la direction de déplacement du véhicule automobile (1).

4. Procédé selon l'une des revendications précédentes,
**caractérisé en ce qu'**une position relative et/ou une vitesse relative entre le véhicule automobile (1) et l'autre véhicule (7) est déterminée à l'aide des données de capteur, une période de temps s'écoulant jusqu'à ce que l'éventuelle collision soit déterminée à l'aide de la position relative et/ou de la vitesse relative déterminée(s) et la gravité de l'éventuelle collision est déterminée à l'aide de la période de temps.

5. Procédé selon l'une des revendications précédentes,
**caractérisé en ce qu'**une décélération maximale de l'autre véhicule (7) est déterminée à l'aide des données de capteur et la gravité de l'éventuelle collision est déterminée à l'aide de la décélération déterminée.

**6.** Procédé selon l'une des revendications précédentes, **caractérisé en ce qu'**une pluralité de zones d'impact (A, B, C) du véhicule automobile (1) sont prédéterminées et **en ce qu'**une probabilité d'impact pour chacune des zones d'impact (A, B, C) prédéterminées est déterminée à l'aide des données de capteur.

**7.** Dispositif de commande (6) pour un véhicule automobile (1), dans lequel le dispositif de commande (6) est conçu pour déterminer la gravité d'une éventuelle collision entre le véhicule automobile (1) et un autre véhicule (7), dans lequel le dispositif de commande (6) est conçu pour recevoir des données de capteur, qui décrivent l'autre véhicule (7), d'au moins un capteur (3) du véhicule automobile (1), pour déterminer, à l'aide des données de capteur, une variation de vitesse, qui décrit une différence entre une vitesse ($V_1$) du véhicule automobile (1) avant la collision et une vitesse de collision ($V_c$) du véhicule automobile (1) après la collision, et pour déterminer la gravité de l'éventuelle collision à l'aide de la variation de vitesse déterminée, dans lequel le dispositif de commande (6) est conçu pour estimer une masse ($m_2$) de l'autre véhicule (7) à l'aide des données de capteur et pour déterminer en outre la gravité de l'éventuelle collision à l'aide de la masse ($m_2$) estimée, **caractérisé en ce que** les données de capteur décrivent au moins une surface extérieure de l'autre véhicule (7), dans lequel le dispositif de commande (6) est conçu pour déterminer les dimensions extérieures de l'autre véhicule (7) à l'aide des données de capteur et pour estimer la masse ($m_2$) de l'autre véhicule (7) à l'aide des dimensions extérieures déterminées de l'autre véhicule (7), **en ce que** l'autre véhicule (7) est associé à une classe de véhicule prédéterminée à l'aide des données de capteur et la masse ($m_2$) de l'autre véhicule (7) est déterminée à l'aide de la classe de véhicule associée, et **en ce qu'**un angle de braquage maximal ($s_l$, $s_r$) de l'autre véhicule (7) est déterminé à l'aide des données de capteur et la gravité de l'éventuelle collision est déterminée à l'aide de l'angle de braquage ($s_l$, $s_r$) déterminé.

**8.** Système d'aide à la conduite (2) pour un véhicule automobile (1) comportant au moins un capteur (3), en particulier un capteur radar, et un dispositif de commande (6) selon la revendication 7.

**9.** Système d'aide à la conduite (2) selon la revendication 8, **caractérisé en ce que** le système d'aide à la conduite (2) est conçu pour commander au moins un dispositif de protection des occupants en fonction de la variation de vitesse déterminée au moyen du dispositif de commande.

**10.** Système d'aide à la conduite (2) selon la revendication 9, **caractérisé en ce que** le système d'aide à la conduite (2) est conçu pour desserrer un frein du véhicule automobile (1) si la variation de vitesse déterminée dépasse une première valeur de seuil, pour commander un tendeur de ceinture si la variation de vitesse déterminée dépasse une deuxième valeur de seuil et/ou pour ajuster une position d'au moins une partie d'un appuie-tête si la variation de vitesse déterminée dépasse une troisième valeur de seuil.

**11.** Système d'aide à la conduite (2) selon la revendication 10, **caractérisé en ce que** le système d'aide à la conduite (2) est conçu pour ajuster la position d'au moins une partie de l'appuie-tête en fonction des probabilités de collision déterminées par le dispositif de commande (6) pour les zones de collision (A, B, C) prédéterminées.

**12.** Véhicule automobile (1) comportant un système d'aide à la conduite (2) selon l'une des revendications 8 à 11.

Fig.1

T1

$V_1$

1

$m_1$

$V_2$

7

$m_2$

T2

$V_C = V_i$

1

$m_1$

$V_i$

$m_2$

7

## Fig.2

T1

$V_1$

1

$m_1$

$V_2$

7

$m_2$

T2

$V_C = V_e$

1

$m_1$

$m_2$

7

## Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6085151 A
- DE 19933782 A1
- DE 102006002746 A1
- DE 10354035 A1

**In der Beschreibung aufgeführte Nicht-Patentliteratur**

- **S. G. SHELBY.** Delta-V as a measure of traffic conflict severity. *3rd International Conference on Road Safety and Simulation,* 14. September 2011
- **T. WENZEL.** *Analysis of the relationship between vehicle weigh/size and safety, and implications for federal fuel economy regulation,* 2010